(19) Europäisches Patentamt
European Patent Office
Office européen des brevets

(11) Veröffentlichungsnummer: **0 069 895**
**B1**

(12) **EUROPÄISCHE PATENTSCHRIFT**

(45) Veröffentlichungstag der Patentschrift: **10.10.84**

(51) Int. Cl.³: **C 09 B 67/10**, C 09 B 67/04

(21) Anmeldenummer: **82105608.2**

(22) Anmeldetag: **25.06.82**

(54) **Verfahren zur Konditionierung eines Pigments.**

(30) Priorität: **06.07.81 US 280047**
**06.07.81 US 280647**
**13.04.82 US 367088**

(43) Veröffentlichungstag der Anmeldung:
**19.01.83 Patentblatt 83/3**

(45) Bekanntmachung des Hinweises auf die Patenterteilung:
**10.10.84 Patentblatt 84/41**

(84) Benannte Vertragsstaaten:
**CH DE FR GB LI**

(56) Entgegenhaltungen:
**CH - A - 381 781**
**DE - A - 1 914 208**
**FR - A - 1 580 971**
**FR - A - 2 224 530**

**CHEMICAL ABSTRACTS, Band 90, Nr. 26, Juni 1976, Seite 106, Nr. 205934n, Columbus, Ohio, USA**

(73) Patentinhaber: **Mobay Chemical Corporation, Penn Lincoln Parkway West, Pittsburgh, Pennsylvania 15205 (US)**

(72) Erfinder: **Bachmann, William Eugene, 205 North Haledon Avenue, North Haledon N.J. 07508 (US)**
Erfinder: **Santimauro, Francis, 731 Birchwood Drive, Wyckoff New Jersey 07481 (US)**

(74) Vertreter: **Gremm, Joachim, Dr. et al, Bayer AG c/o Zentralbereich Patente, Marken und Lizenzen, D-5090 Leverkusen 1, Bayerwerk (DE)**

**EP 0 069 895 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die *Einspruchsgebühr entrichtet worden ist (Art. 99(1) Europäisches Patentübereinkommen).*

BUNDESDRUCKEREI BERLIN

**Beschreibung**

Die Erfindung betrifft ein Verfahren zur Konditionierung eines polycyclischen oder eines Phthalocyaningrün-Pigments durch Salzmahlung in Gegenwart einer organischen Flüssigkeit. Das neue und verbesserte Verfahren zur Konditionierung eines polycyclischen oder eines Phthalocyaningrün-Pigments ist dadurch gekennzeichnet, daß man ein rohes, oder präkonditioniertes polycyclisches Pigment oder ein rohes oder präkonditioniertes Phthalocyaningrün-Pigment in Gegenwart von

a) mindestens einem Mahlhilfsmittel aus der Gruppe Natriumchlorid, Natriumsulfat, Aluminiumsulfat,
b) mindestens einem Glykol der Formeln

$HO(CH_2CH_2O)_xH$

$HO(CH_2CH_2CH_2O)_yH$ oder

$HO(CH(CH_3)CH_2O)_yH$

in denen
x 2—20, vorzugsweise 4—10 und
y 1—20, vorzugsweise 2—10, bezeichnen

oder einem Gemisch dieser Glykole und
c) 0,05—2 Gew.-Teile, vorzugsweise 0,1—1,0 Gew.-Teile, berechnet als wasserfreies Salz und bezogen auf 1 Gew.-Teil des Rohpigments, mindestens eines Halogenids, vorzugsweise eines Chlorids, eines Metalls der Gruppe IIa des Periodensystems, mahlt.

Das Verfahren eignet sich insbesondere zur Konditionierung eines polycyclischen Pigments.

Chemical Abstracts 90, 205934 (205934 n) beschreibt die Konditionierung eines ähnlichen Pigments nach dem Verfahren, jedoch unter Einsatz von Ethylenglycol, wobei über die günstige Wirkung von Calciumchlorid hinsichtlich der Farbstöcke berichtet wird. Beim Verfahren nach der Erfindung wird jedoch auch eine verbesserte Transparenz und ein reinerer Farbton gegenüber dem Arbeiten ohne Erdalkalihalogenid erreicht, was nicht vorhersehbar war.

Die in das erfindungsgemäße Verfahren eingesetzten Rohpigmente können nach den bekannten Verfahren hergestellt werden. Zur Präkonditionierung eignen sich insbesondere die bekannten Verfahren der Säureverpastung und Wiederausfällung sowie der Verküpung und Reoxidation.

Beispiele für Pigmente, die vorteilhaft nach dem erfindungsgemäßen Verfahren konditioniert werden können, sind Pigmente der Anthanthron-, Pyranthron-, Isoviolanthron-, Flavanthron-, Indanthron-, Naphthaldazin-, Thioindigo-, Naphthalintetracarbonsäure-, Chinacridon-, Dioxazin-, Isoindolinon-, Perylentetracarbonsäure-, Anthrapyrimidin-, Acylaminoanthrachinon-, Dianthrachinonyl-, Azoanthrachinon-, Azomethinanthrachinon-Reihe sowie hochchlorierte und/oder -bromierte Kupferphthalocyanin-Pigmente, d. h. solche, die pro Molekül wenigstens 14 Halogenatome enthalten.

Einzelbeispiele sind: Pigment Red 197 (Colour Index Constitution No. 59710); Pigment Red 168 (C.I. 59300); Pigment Violet 23 (C.I. 51319); Pigment Violet 29 (C.I. 71129); Pigment Red 177 (C.I. 65300); Pigment Yellow 108 (C.I.68420); Pigment Red 224 (C.I.71127); Pigment Red 179 (C.I. 71130); Pigment Red 190 (C.I. 71140); Pigment Green 7 (C.I. 74260); Pigment Green 36 (C.I. 74265).

Beispiele für geeignete Glykole sind: Polyethylenglykol 200, Polyethylenglykol 350, Polyethylenglykol 400, Polyethylenglykol 600, Polypropylenglykol 425, Dipropylenglykol, Tripropylenglykol; Polyethylenglykol 400 sowie Gemische der genannten Polyethylen- und Polypropylenglykole werden bevorzugt eingesetzt. Die verwendete Glykolmenge beträgt vorzugsweise 0,5—4 Gew.-Teile, besonders bevorzugt 1—3 Gew.-Teile, bezogen auf 1 Gew.-Teil des Rohpigments.

Geeignete Halogenide von Metallen der Gruppe IIa des PSE sind: $CaCl_2$, $Ca(OCl)_2$, $MgCl_2$, $CaCl(OCl)$, $CaBr_2$, $BaCl_2$, $SrCl_2$; $CaCl_2$ wird bevorzugt verwandt. Sowohl wasserfreies als auch hydratisiertes $CaCl_2$ — wie $CaCl_2 \cdot 2\,H_2O$ — sind wirksam; sie kommen bevorzugt in feinpulverisierter Form zum Einsatz.

Die eingesetzte Menge an Natriumchlorid, Natriumsulfat oder Alumiumsulfat wird von Erwägungen bezüglich Wirtschaftlichkeit und Effektivität der Mahlung bestimmt. Im allgemeinen werden 2—12 Gew.-Teile, vorzugsweise 3—8 Gew.-Teile, bezogen auf 1 Gew.-Teil an Rohpigment, eingesetzt.

Das erfindungsgemäße Verfahren wird vorteilhafterweise in »heavy-duty«-Mischern (Typ Baker-Perkins oder Werner-Pfleiderer) ausgeführt.

Das gemahlene Pigment wird nach üblichen Verfahren aufgearbeitet. Zum Beispiel wird das gemahlene Gemisch mit Wasser oder verdünnter Säure extrahiert, um das Mahlhilfsmittel, das Glykol und das Metallhalogenid zu entfernen.

Gewünschtenfalls kann sich dem erfindungsgemäßen Mahlverfahren eine Nachbehandlung zur Verbesserung der Verarbeitungseigenschaften der Pigmente anschließen. Zu diesem Zweck wird das

feuchte oder trockene gemahlene Pigment in üblicher Weise nachbehandelt, z. B. durch Behandlung mit Lösungsmitteln, wie Wasser, Alkohole, Ketone, Kohlenwasserstoffe, Amide, Ester usw., wobei sowohl bei Raumtemperatur als auch bei höheren Temperaturen, bei Normaldruck oder unter erhöhtem Druck, gearbeitet werden kann. Auch Lösemittelgemische können eingesetzt werden. Als Nachbehandlungsverfahren eignet sich auch die Harzung.

Das nachbehandelte Pigment wird z. B. durch Abdestillieren gegebenenfalls verwendeter Lösemittel oder Verdünnen mit Wasser und Filtration aufgearbeitet. Der Preßkuchen wird wie üblich oder durch Gefriertrocknung aus wäßriger oder organischer Phase getrocknet.

Für spezifische Anwendungszwecke kann es erwünscht sein, in das Pigment einen Zusatzstoff einzuarbeiten, um die Dispergierbarkeit zu verbessern. Solche Zusatzstoffe sind z. B. aliphatische oder cycloaliphatische Carbonsäuren oder deren Salze oder Derivate, Abietinsäure, ihre Salze und Derivate sowie ähnliche Stoffe.

Beispielhaft seien genannt: Stearinsäure oder andere Fettsäuren, Naphtensäuren, 2,2'-Dimethyloctansäure, Methyl- oder andere Alkylabietate, natürliche Harze oder Addukte, die durch Umsetzung natürlicher Harze oder deren Konstituenten mit Maleinsäureanhydrid oder Fumarsäure erhalten werden, dimere oder polymere Formen natürlicher Harze sowie die Salze der o. g. Säuren, wie die Zink-, Barium-, Calcium- oder Strontiumsalze.

Die gemäß dem erfindungsgemäßen Verfahren konditionierten Pigmente weisen überraschenderweise, verglichen mit Produkten, die in Abwesenheit eines Halogenids eines Metalls der Gruppe IIa des PSE gemahlen wurden, verbesserte Transparenz, einen reineren Farbton und größere Farbstärke auf. Sie eignen sich insbesondere für Automobillacke und zur Kunststoff-Färbung, insbesondere zur Massefärbung von Kunststoffen auf Basis von Acrylnitril-Butadien-Styrol-Copolymerisat, Polypropylen, Polyethylen, Polyvinylchlorid, Polyamid u. a.

Das neue Verfahren eignet sich insbesondere zur Konditionierung von rohem oder vorkonditioniertem Perylen-3,4,9,10-tetracarbonsäurediimid der Formel

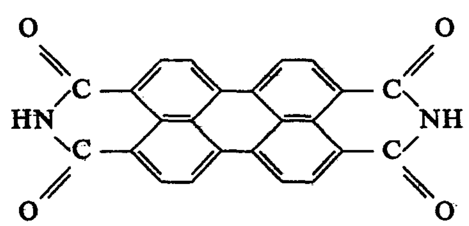

Auf diese Weise, gegebenenfalls durch eine entsprechende Nachbehandlung, erhält man ein Pigment der obigen Formel, das eine spezifische Oberfläche, gemessen nach dem BET-Verfahren, von 60—90 $m^2/g$, vorzugsweise 75—85 $m^2/g$ und eine Korngrößenverteilung im Bereich von 0,02—0,3 $\mu m$ aufweist.

Das eingesetzte rohe Pigment kann nach bekannten Verfahren erhalten werden (s. z. B. BIOS Final Report, No. 1484, S. 21). Vor der Salzmahlung kann es z. B. durch das bekannte Verfahren der »Säureverpastung« vorkonditioniert werden. Dabei wird das Pigment durch Zugabe der Lösung des Rohpigments zu Wassser oder Eis gefällt. Ein anderes Verfahren der Vorkonditionierung besteht darin, daß man das Rohpigment mit Natriumdithionit in wäßrig-alkalischem Medium reduziert (verküpt), und man anschließend durch Behandlung mit Oxidationsmitteln die gewünschte oxidierte Form des Pigments wieder ausfällt. Ein qualitativ besonders hochstehendes Pigment erhält man, wenn man das rohe Perylen-3,4,9,10-tetracarbonsäurediimid mit 83—84 %iger Schwefelsäure behandelt, auf Wasser gießt, filtriert, den Rückstand zur Entfernung von Schwefelsäure mit Wasser wäscht, das erhaltene Produkt mahlt und gewünschtenfalls nachbehandelt.

Zur Nachbehandlung des erhaltenen Perylen-3,4,9,10-tetracarbonsäurediimid-Pigments eignen sich insbesondere die im vorhergehenden beschriebenen Verfahren. Auch die oben erwähnten Zusatzstoffe eignen sich zur Verbesserung der Dispergierbarkeit.

Die neue Pigmentform von Perylen-3,4,9,10-tetracarbonsäurediimid weist gegenüber den bisher bekannten Formen höhere Transparenz, verbesserte Farbstärke und einen klareren Ton auf. Die neue Pigmentform eignet sich insbesondere zur Einarbeitung in Automobillacke zur Erzeugung hochtransparenter Färbungen, ist aber auch z. B. zur Massefärbung von Acrylnitril-, Butadien-, Styrol-, Polypropylen-, Polyethylen-, Polyvinylchlorid-, Polyamid- und anderen Kunststoffen von Interesse.

Die in der folgenden Beispielen angegebenen Teile sind Gewichtsteile.

## Beispiel 1

Ein Baker-Perkins-Mischer, der 270 Teile mikropulverisiertes NaCl, 32 C.I. Pigment Violet 23, 75 Teile Polyethylenglykol 400 und 6,5 Teile $CaCl_2$-Dihydrat (pulverisiert) enthält, wird für 6 Stunden in Betrieb

gesetzt, der Ansatz entfernt und mit Wasser extrahiert, um das Pigment von Salzen und Polyglykol zu befreien; anschließend wird das wasserfeuchte Pigment getrocknet. Ein Hoover-Muller-Test zeigt, daß das Pigment verbesserte Transparenz, einen klareren Farbton und größere Farbstärke hat verglichen mit einem Produkt, das in der gleichen Weise, aber ohne Zusatz von $CaCl_2$, hergestellt wurde.

## Beispiel 2

Ein Ansatz, der 32 Teile eines rohen Pigments der Formel

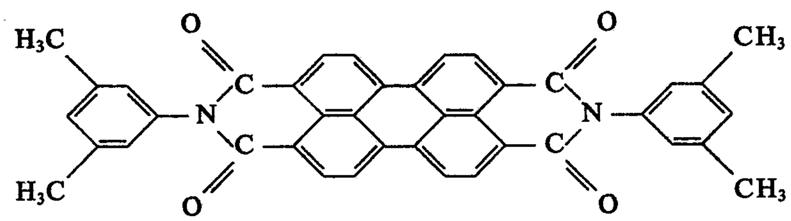

160 Teile Natriumchlorid (mikropulverisiert), 45 Teile Polyethylenglykol 400 und 7,5 Teile Calciumchloriddihydrat in pulverisierter Form enthält, wird 6 Stunden in einem Baker-Perkins-Mischer gemahlen, der Ansatz entfernt und mit Wasser zur Entfernung von Salzen und Polyglykol extrahiert. Anschließend wird das wasserfeuchte gemahlene Pigment getrocknet. Das Pigment wird dem Hoover-Muller-Test unterworfen, wobei sich herausstellt, daß es transparenter ist als ein Pigment, das ohne Zusatz von Calciumchlorid gemahlen wurde.

## Beispiel 3

Man wiederholt die Arbeitsweise von Beispiel 2 mit C.I. Pigment Red 190 und unter Zusatz von 40 Teilen Polyethylenglykol 400 und 6,5 Teilen Calciumchloriddihydrat als Pulver. Das extrahierte getrocknete Pigment, das in der selben Weise wie in Beispiel 2 getestet wurde, war transparenter und reiner im Farbton als ein Pigment, das ohne Zusatz von Calciumchlorid gemahlen worden war.

## Beispiel 4

Beispiel 3 wurde unter Verwendung von C.I. Pigment Red 179, 49 Teilen Polyethylenglykol 400 und 6,5 Teilen Calciumchloriddihydrat in Pulverform wiederholt. Das extrahierte und getrocknete Pigment erwies sich im Vergleich zu einem Pigment, das ohne Zusatz von Calciumchlorid gemahlen worden war, transparenter, gelber und klarer im Farbton.

## Beispiel 5

Das vorhergehende Beispiel wird wiederholt, wobei als Pigment ein Pigment der Formel

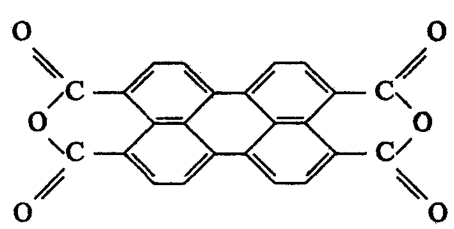

zusammen mit 50 Teilen Dipropylenglykol und 6,4 Teilen pulverförmigem Calciumchloriddihydrat eingesetzt wurde. Nach Extraktion und Trocknung erwies sich das Pigment als transparenter und farbstärker als ein Pigment, das ohne Zusatz von Calciumchlorid gemahlen wurde.

## Beispiel 6

### Perylentetracarbonsäurediimid (Pigment Violet 29; C.I. No. 71127)

Ein Ansatz, der 32 Teile rohes Perylentetracarbonsäurediimid, 160 Teile Natriumchlorid (mikropulverisiert), 52 Teile Polyethylenglykol 400 und 6,5 Teile Calciumchloriddihydrat in pulverisierter Form enthält, wird in einem Baker-Perkins-Mischer 6 Stunden gemahlen. Der Ansatz wird entfernt und zur Entfernung von Salzen und Polyglykol mit Wasser extrahiert und das wasserfeuchte gemahlene Pigment getrocknet. Hoover-Muller-Tests zeigen, daß das Pigment gute Transparenz, einen klaren Farbton und große Farbstärke aufweist.

## Beispiel 7

### Dibromanthranthron (Pigment Red 168; C.I. No. 59300)

Ein Baker-Perkins-Mischer, der 280 Teile mikropulverisiertes Natriumchlorid, 65 Teile Polyethylenglykol 200 und 32 Teile Dibromanthranthron enthält, wird in Gang gesetzt, bis die Masse ein einheitliches Aussehen angenommen hat. Danach gibt man 6,5 Teile Calciumchloriddihydrat in pulverisierter Form zu. Nach einer Mahlzeit von 6 Stunden wird der Ansatz mit kochendem Wasser extrahiert, filtriert und von wasserlöslichem Material freigewaschen und getrocknet. Der Test nach Hoover-Muller zeigt, daß das erhaltene Produkt tiefer im Vollton, transparenter, gelber und klarer im Farbton ist als das gleiche Pigment, das auf die gleiche Weise aber ohne Zusatz von Calciumchlorid gemahlen wurde.

Bei Verwendung von Chlorkalk anstellen von Calciumchlorid erhält man ebenso einen viskosen Mahlansatz und ein ausgezeichnetes Produkt, das ähnlich dem unter Verwendung von Calciumchlorid hergestellten ist.

## Beispiel 8

### Bromiertes Pyranthron (Pigment Red 197; C.I. No. 59710)

Man wiederholt das vorhergehende Beispiel, setzt aber anstelle des bromierten Anthranthrons rohes bromiertes Pyranthron sowie 65 Teile Polyethylenglykol 200 und 6,5 Teile Calciumchloridpulver ein. Nach dem Mahlen und der üblichen Extraktion und dem Trocknen zeigt der Hoover-Muller-Test, daß das Produkt farbtiefer, transparenter und klarer im Farbton ist als ein Produkt, das ohne Zusatz von Calciumchlorid gemahlen wurde.

Das obige Verfahren kann auch durchgeführt werden, indem man anstelle der 65 Teile Polyethylenglykol 200 eine äquivalente Menge an Polyethylenglykol 350, 400 oder 600 einsetzt. Auch kann man anstelle von Polyethylenglykol 200 eine äquivalente Menge eines Gemischs aus (1) eines Polyethylenglykols der Reihe Polyethylenglykol 200, 350, 400 oder 600 und (2) einem Polyglykol aus der Reihe Polypropylenglykol 425, Dipropylenglykol oder Tripropylenglykol einsetzen.

## Beispiel 9

### Polybromchlorkupferphthalocyaningrün (Pigment Green 36; C.I. No. 74265)

Analog zum vorigen Mahlansatz wird ein Ansatz der 6,5 Teile Calciumchlorid, 49 Teile Polyethylenglykol 400 und rohes Polybromchlorkupferphthalocyanin erhält, behandelt und das gemahlene Pigment extrahiert und getrocknet, wie im vorhergehenden beschrieben. Gegenüber einem auf die gleiche Weise, aber ohne Zusatz von Calciumchlorid im Mahlansatz hergestellten Pigment zeigt das hier erhaltene Pigment im Hoover-Muller-Test eine größere Transparenz. Verwendet man anstelle von Calciumchlorid Chlorkalk, so zeigt auch das so erhaltene Produkt überlegene Eigenschaften.

## Beispiel 10

### Pentadecachlorkupferphthalocyanin (Pigment Green 7; C.I. No. 74260)

Ein Mahlansatz in einem Baker-Perkins-Mischer der 160 Teile mikropulverisiertes Natriumchlorid, 46 Teile Polyethylenglykol 400 und 32 Teile rohes Pentadecachlorkupferphthalocyanin enthält, wird bis zur Einheitlichkeit vermischt. Danach gibt man 6,5 Teile Calciumchlorid hinzu und mahlt 6 Stunden lang. Die gemahlene Masse wird extrahiert und das Pigment in der üblichen Weise getrocknet. Der Test ergibt, daß das Produkt tiefer im Farbton, transparenter und etwas farbstärker ist als ein Kontrollpigment, das in der gleichen Weise, aber ohne Calciumchlorid, gemahlen wurde. Verwendet man anstelle von Calciumchlorid 13 Teile Chlorkalk, so resultiert ebenfalls ein dem Kontrollpigment überlegenes Produkt.

Beispiel 11

160 Teile Natriumchlorid (mikropulverisiert), 32 Teile rohes Perylen-3,4,9,10-tetracarbonsäurediimid (Oberfläche gemessen nach BET=46 $m^2/g$) und 56 Teile Polyethylenglykol 400 werden in einen Mischer aus rostfreiem Stahl von Werner-Pfleiderer- oder Baker-Perkins-Typ gegeben. Der steife Ansatz wird etwa 6 Stunden gerührt (Temperatur der Masse 70 bis 73°C) aus dem Mischer entnommen, und in üblicher Weise mit Wasser behandelt, um das organische Glykol und das Mahlhilfsmittel zu entfernen. Das Pigment wird in Form eines wasserhaltigen Teigs oder als trockener Farbstoff isoliert. Das Produkt zeigt eine spezifische Oberfläche gemessen nach BET von 79 $m^2/g$. Der Hoover-Muller-Test zeigt, daß das erhaltene Pigment im Vollton stärker und transparenter, von größerer Farbstärke und klarer im Ton ist als das Ausgangsmaterial. Die Überlegenheit dieses Produktes zeigt sich auch bei der Anwendung in Überzugsmaterialien auf Basis von Acryllacken.

Beispiel 12

Physikalische Behandlung im Anschluß an die Salzmahlung

Der gemäß Beispiel 11 nach der Salzmahlung und der Extraktion des Glykols und des Mahlhilfsmittels erhaltene wasserhaltige Pigmentteig wird mit Wasser in einen Autoklaven geschlämmt und der Ansatz durch weiteren Wasserzusatz auf insgesamt 700 Teile, die 32 Teile an Pigment enthalten, gebracht. Man erhitzt 3 Stunden auf 145°C unter Eigendruck und kühlt dann auf 60°C ab. Man öffnet den Autoklaven, bringt den pH-Wert mit einer kleinen Menge Salzsäure auf 3,5 und fügt eine Emulsion, die 32 Teile Wasser, 0,45 Teile Di-2-ethylhexylnatriumsulfosuccinat und 15,4 Teile eines benzinähnlichen Verdünnungsmittels (VM u. P Naphtha) enthält, hinzu. Man rührt 1 Stunde, filtriert das Reaktionsgemisch und wäscht den Filterrückstand zur Entfernung des oberflächenaktiven Mittels und anderer wasserlöslicher organischer Materialen. Zur Entfernung des Verdünners und des Wassers trocknet man bei 80—85°C. Wie das gemäß Beispiel 11 erhaltene Produkt weist auch das jetzt erhaltene Produkt ausgezeichnete koloristische Eigenschaften auf und hat zusätzlich verbesserte Weichheit im Griff und verbesserte Dispergierbarkeit in Lacken und Kunststoffen.

Beispiel 13

Harzung bei der Nachbehandlung

Der gemäß Beispiel 11 erhaltene wasserhaltige Pigmentteig wird analog zu Beispiel 12 in einem Autoklaven 1 Stunde bei 145°C unter Eigendruck gehalten. Nach Abkühlung auf 70°C wird der Autoklav geöffnet. Man versetzt den Autoklavenansatz mit einer Lösung, die 0,46 Teile NaOh, 30 Teile Wasser und 0,85 Teile Naphthensäure enthält. Man rührt den Ansatz 15 Minuten und fügt dann eine Lösung von 1,7 Teilen $NiCl_2 \cdot 6\ H_2O$ in 11 Teilen Wasser hinzu und rührt 2 Stunden bei etwa 70°C. Man filtriert, wäscht den Rückstand frei von löslichen Salzen und trocknet bei 80—85°C. Das erhaltene Pigment weist bei der Anwendung zur Pigmentierung Kunststoffe und Überzugsmaterialien ausgezeichneter Dispergierbarbkeit auf.

**Patentansprüche**

Verfahren zur Konditionierung eines polycyclischen Pigments oder eines Phthalocyaningrün-Pigments, dadurch gekennzeichnet, daß man ein rohes oder präkonditioniertes polycyclisches Pigment oder ein rohes oder präkonditioniertes Phthalocyanin-grün-Pigment in Gegenwart von

a) mindestens einem Mahlhilfsmittel aus der Gruppe Natriumsulfat, Natriumchlorid, Aluminiumsulfat,

b) mindestens einem Glykol der Formeln

$HO(CH_2CH_2O)_xH$

$HO(CH_2CH_2CH_2O)_yH$ oder

$HO(CH(CH_3)CH_2O)_yH$

in denen
x 2—20, vorzugsweise 4—10 und
y 1—20, vorzugsweise 2—10, bezeichnen oder

einem Gemisch dieser Glykole und

c) 0,05—2 Gew.-Teile, vorzugsweise 0,1—1,0 Gew.-Teile, bezogen auf 1 Gew.-Teil des Rohpigments, mindestens eines Halogenids, vorzugsweise eines Chlorids, eines Metalls der Gruppe IIa des Periodensystems mahlt.

2. Verfahren gemäß Anspruch 1, dadurch gekennzeichnet, daß man als Glykol Polyethylenglykol 200, Polyethylenglykol 350, Polyethylenglykol 600, Polypropylenglykol 425, Dipropylenglykol, Tripropylenglykol, oder Gemische dieser Glykole einsetzt.

3. Verfahren gemäß Anspruch 1, dadurch gekennzeichnet, daß man als Glykol oder Bestandteil des Glykolgemisches Polyethylenglykol 400 einsetzt.

4. Verfahren gemäß den Ansprüchen 1 bis 3, dadurch gekennzeichnet, daß man als Metall-(IIa)-halogenid $Ca(OCl)_2$, $CaCl(OCl)$, $MgCl_2$, $CaBr_2$, $BaCl_2$ oder $SrCl_2$ einsetzt.

5. Verfahren gemäß den Ansprüchen 1 bis 3, dadurch gekennzeichnet, daß man als Metall-(IIa)-halogenid $CaCl_2$ einsetzt.

6. Verfahren gemäß den Ansprüchen 1 bis 5, dadurch gekennzeichnet, daß man, bezogen auf 1 Gew.-Teil Rohpigment, 2 bis 12 Gew.-Teile, vorzugsweise 3 bis 8 Gew.-Teile, Mahlhilfsmittel einsetzt.

7. Verfahren gemäß den Ansprüchen 1 bis 6 zur Konditionierung eines Pigments der Anthranthron-, Pyranthron-, Isoviolanthron-, Flavanthron-, Indanthron-, Naphthaldazin-, Thioindigo-, Naphthalintetracarbonsäure-, Chinacridon-, Dioxazin-, Isoindolinon-, Perylentetracarbonsäure-, Anthrapyrimidin-, Acylaminoanthrachinon-, Dianthrochinonyl-, Azoanthrachinon- oder Azomethinanthrachinon-Reihe oder eines hochchlorierten oder hochbromierten Kupferphthalocyanin-Pigments.

8. Verfahren gemäß den Ansprüchen 1 bis 6 zur Konditionierung von Pigment Red 197 (C.I. 59710), Pigment Red 168 (C.I. 59300), Pigment Violet 23 (C.I. 51319), Pigment Red 177 (C.I. 65300), Pigment Yellow 108 (C.I. 68420), Pigment Red 224 (C.I. 71127), Pigment Red 179 (C.I. 71130), Pigment Red 190 (C.I. 71140), Pigment Green 7 (C.I. 74260) und Pigment Green 36 (C.I. 74265).

9. Verfahren gemäß den Ansprüchen 1 bis 6 zur Konditionierung von Pigment Violet 29 (C.I. 71129).

10. Pigment der Formel

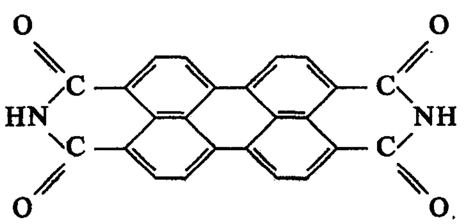

gekennzeichnet durch eine spezifische Oberfläche, gemessen nach dem BET-Verfahren von 60 bis 90 $m^2/g$, vorzugsweise 75—85 $m^2/g$ und eine Korngrößenverteilung im Bereich 0,02—0,3 $\mu m$, hergestellt nach dem Verfahren gemäß Anspruch 1.

## Claims

1. Process for conditioning a polycyclic pigment or a phthalocyanine green pigment, characterised in that a crude or preconditioned polycyclic pigment or a crude or preconditioned phthalocyanine green pigment is ground in the presence of

a) at least one grinding aid from the group comprising sodium sulphate, sodium chloride and aluminium sulphate,

b) at least one glycol of the formulae

$HO(CH_2CH_2O)_xH$

$HO(CH_2CH_2CH_2O)_yH$ or

$HO(CH(CH_3)CH_2O)_yH$

in which
x denotes 2—20, preferably 4—10 and
y denotes 1—20, preferably 2—10,

or a mixture of these glycols and

c) 0.05—2 parts by weight, preferably 0.1—1.0 parts by weight, based on 1 part by weight of the crude pigment, of at least one halide, preferably a chloride, of a metal of group IIa of the periodic system.

2. Process according to claim 1, characterised in that polyethylene glycol 200, polyethylene glycol 350, polyethylene glycol 600, polypropylene glykol 425, dipropylene glycol, tripropylene glycol or mixtures of these glycols are used as the glycol.

3. Process according to claim 1, characterised in that polyethylene glycol 400 is used as the glycol or as a constituent of the glycol mixture.

4. Process according to claims 1 to 3, characterised in that $Ca(OCl)_2$, $CaCl(OCl)$, $MgCl_2$, $CaBr_2$, $BaCl_2$ or $SrCl_2$ is used as the (IIa)-metal halide.

5. Process according to claims 1 to 3, characterised in that $CaCl_2$ is used as the (IIa)-metal halide.

6. Process according to claims 1 to 5, characterised in that, based on 1 part by weight of crude pigment, 2 to 12 parts by weight, preferably 3 to 8 parts by weight, of grinding aid is used.

7. Process according to claims 1 to 6 for conditioning a pigment of the anthranthrone, pyranthrone, isoviolanthrone, flavanthrone, indanthrone, naphthaldazine, thioindigo, naphthalene tetracarboxylic acid, quinacridone, dioxazine, isoindolinone, perylene tetracaboxylic acid, anthrapyrimidine, acylamino anthraquinone, dianthroquinonyl, azo anthraquinone or azomethine anthraquinone series or of a highly chlorinated or highly brominated copper phthalocyanine pigment.

8. Process according to claims 1 to 6 for conditioning Pigment Red 197 (C.I. 59710), Pigment Red 168 (C.I. 59300), Pigment Violet 23 (C.I. 51319), Pigment Red 177 (C.I. 65300), Pigment Yellow 108 (C.I. 68420), Pigment Red 224 (C.I. 71127), Pigment Red 179 (C.I. 71130), Pigment Red 190 (C.I. 71140), Pigment Green 7 (C.I. 74260) and Pigment Green 36 (C.I. 74265).

9. Process according to claims 1 to 6 for conditioning Pigment Violet 29 (C.I. 71129).

10. Pigment of the formula

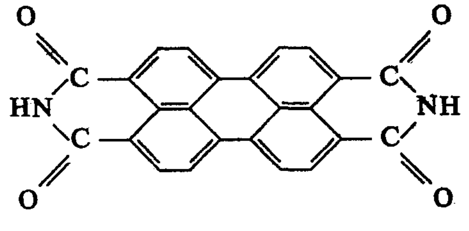

characterised by a specific surface area, measured by the BET method, of 60 to 90 $m^2/g$, preferably 75—85 $m^2/g$ and a particle size distribution in the range of 0.02—0.3 μm, prepared by the process according to claim 1.

**Revendications**

1. Procédé de conditionnement d'un pigment polycyclique ou d'un pigment au vert de phtalocyanine, caractérisé en ce qu'on broie un pigment polycyclique brut ou préconditionné ou un pigment au vert de phtalocyanine brut ou préconditionné en présence

a) d'au moins une substance auxiliaire de broyage choisie dans le groupe comprenant le sulfate de sodium, le chlorure de sodium, le sulfate d'aluminium,

b) au moins un glycol des formules

$HO(CH_2CH_2O)_xH$

$HO(CH_2CH_2CH_2O)_yH$ et

$HO(CH(CH_3)CH_2O)_yH$

dans lesquelles
x a une valeur de 2—20, de préférence de 4—10 et
y a une valeur de 1—20, de préférence de 2—10, ou

d'un mélange de ces glycols et

c) 0,05 à 2 parties en poids, de préférence 0,1 à 1,0 parties en poids, par rapport à 1 partie en poids du pigment brut, d'au moins un halogénure, de préférence un chlorure, d'un métal du groupe IIa du Système Périodique.

2.Procédé suivant la revendication 1, caractérisé en ce qu'on utilise comme glycol le polyéthylène-glycol 200, le polyéthylène-glycol 350, le polyéthyléne-glycol 600, le polypropylène-glycol 425, le dipropylène-glycol, le tripropylène-glycol ou des mélanges de ces glycols.

3. Procédé suivant la revendication 1, caractérisé en ce qu'on utilise comme glycol ou comme composant du mélange de glycols le polyéthylène-glycol 400.

4. Procédé suivant les revendications 1 à 3, caractérisé en ce qu'on utilise comme halogénure de métal-(IIa) $Ca(OCl)_2$, $CaCl(OCl)$, $MgCl_2$, $CaBr_2$, $BaCl_2$ ou $SrCl_2$.

5. Procédé suivant les revendications 1 à 3, caractérisé en ce qu'on utilise comme halogénure de métal-(IIa) $CalCl_2$.

6. Procédé suivant les revendications 1 à 5, caractérisé en ce qu'on utilise, par rapport à 1 partie en poids de pigment brut, 2 à 12 parties en poids, de préférence 3 à 8 parties en poids de substance auxiliaire de broyage.

7. Procédé suivant les revendications 1 à 6, pour le conditionnement d'un pigment de la série de l'anthranthrone, de la pyranthrone, de l'isoviolanthrone, de la flavanthrone, de l'indanthrone, de la naphtaldazine, du thioindigo, de l'acide naphtalènetetracarboxylique, de la quinacridone, de la dioxazine, de l'isoindolinone, de l'acide pérylène-tétracarboxylique, de l'anthrapyrimidine, de l'acylamino-anthraquinone, du dianthraquinonyle, de l'azo-anthraquinone ou de l'azométhine-anthraquinone ou d'un pigment de phtalocyanine de cuivre fortement chlorée ou fortement bromée.

8. Procédé suivant les revendications 1 à 6 pour le conditionnement du pigment rouge 197 (C.I. 59710), du pigment rouge 168 (C.I. 59300), du pigment violet 23 (C.I. 51319), du pigment rouge 177 (C.I. 65300), du pigment jaune 108 (C.I. 68420), du pigment rouge 224 (C.I. 68420), du pigment rouge 224 (C.I. 71127), du pigment rouge 179 (C.I. 71130), du pigment rouge 190 (C.I. 71140), du pigment vert 7 (C.I. 74260) et du pigment vert 36 (C.I. 74265).

9. Procédé suivant les revendications 1 à 6, pour le conditionnement du pigment violet 29 (C.I. 71129).

10. Pigment de formule

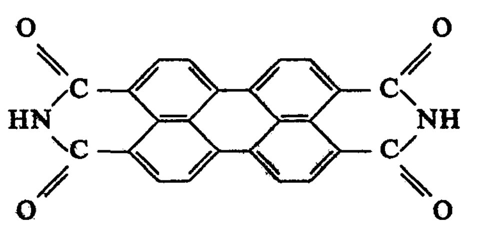

caractérisé par une surface spécifique, mesurée selon la méthode BET, de 60 à 90 m²/g, de préférence de 75 à 85 m²/g, et par une répartition granulométrique dans l'intervalle de 0,02 à 0,3μm, préparé par le procédé selon la revendication.